# EUROPEAN PATENT APPLICATION

(11) **EP 4 553 673 A1**
(43) Date of publication of application: **14.05.2025**
(21) Application number: 23906307.6
(22) Date of filing: 15.05.2023
(51) Int. Cl.: G06F 16/23, G06F 16/178, G06Q 20/20

(54) **INFORMATION PROCESSING SYSTEM, INFORMATION PROCESSING APPARATUS, SECOND INFORMATION PROCESSING APPARATUS, AND RECORDING MEDIUM**

(30) Priority: 22.12.2022 JP 2022205840
(71) Applicant: Toshiba TEC Kabushiki Kaisha, Tokyo 141-8562 (JP)
(72) Inventor: KOBAYASHI, Ryotaro, Tokyo 141-8562 (JP)
(74) Representative: Bandpay & Greuter
(86) International application number: PCT/JP2023/018072
(87) International publication number: WO 2024/134921

(57) **Abstract**

An information processing system includes a first information processing device, a second information processing device, and a storage device. The first information processing device includes an acquisition unit, a file creation unit, and an output unit. The acquisition unit acquires, based on an update to a database that manages data of a plurality of stores, update data for each of the stores from the database. The file creation unit creates a data distribution file for each of the stores based on the update data for each of the stores. The output unit outputs the data distribution file created by the file creation unit so as to be stored in the storage device. The second information processing device includes an acquisition unit and a storage control unit. The acquisition unit acquires, in a case where a data distribution file of a store associated with the second information processing device is stored in the storage device, the data distribution file of the store associated with the second information processing device. The storage control unit updates a database based on the data distribution file of the store associated with the second information processing device.

## Description

### FIELD

Embodiments of the present invention relate generally to an information processing system, an information processing device, a second information processing device, and a recording medium.

### BACKGROUND

In recent years, a client-server point of sales (POS) system has become widespread in which a processing function such as transaction processing and a database are arranged in a cloud, and a cash register function of the cloud is called from a terminal such as a tablet to perform a cash register operation in a store. In such a system, when the cloud cannot be connected due to a communication failure or the like, there may be cases where cash register operation cannot be performed. As a countermeasure in this case, it is conceivable that a server such as an edge server having the same processing function and database as those of the cloud is also arranged on the store side, and the terminal switches the connection destination to the in-store server to continue the business.

However, in a case where a server capable of performing the same processing as the cloud is arranged in the store, it is necessary to synchronize data of the database between the cloud and the edge server. In the database of the cloud, data such as a product master for each store is collectively managed, and each store needs to synchronize only data for each store. In addition, since the number of stores connected to the cloud is several hundred or more, if update request accesses for several hundred stores concentrate on the database of the cloud every time data is updated, the load increases.

### CITATION LIST

### PATENT LITERATURE

Patent Literature 1: Jpn. Pat. Appln. KOKAI Publication No. 2022-76091

### SUMMARY

Accordingly, there is a demand for a technology capable of synchronizing update data of the database on the cloud by narrowing update target stores, thereby reducing a load on the database and the network resources.

A problem to be solved by an embodiment of the present invention is to provide a technique capable of synchronizing only target update data.

### BRIEF DESCRIPTION OF THE DRAWINGS

FIG. 1 is a block diagram illustrating an information processing system according to an embodiment.
FIG. 2 is a diagram illustrating a data structure of a product master according to the embodiment.
FIG. 3 is a sequence diagram illustrating a procedure of information processing by the information processing system according to the embodiment.
FIG. 4 is a flowchart illustrating an example of a procedure of information processing by a cloud server according to the embodiment.
FIG. 5 is a flowchart illustrating an example of a procedure of information processing by a storage server according to the embodiment.
FIG. 6 is a flowchart illustrating an example of a procedure of information processing by an edge server according to the embodiment.

### DETAILED DESCRIPTION

In an embodiment, an information processing system includes a first information processing device, a second information processing device, and a storage device. The first information processing device includes an acquisition unit, a file creation unit, and an output unit. The acquisition unit acquires update data for each store from a database based on the update to the database that manages the data of the plurality of stores. The file creation unit creates a data distribution file for each store based on the update data for each store. The output unit outputs the data distribution file created by the file creation unit so as to be stored in the storage device. The second information processing device includes an acquisition unit and a storage control unit. In a case where a data distribution file of the store associated with the second information processing device is stored in the storage device, the acquisition unit acquires the data distribution file of the store associated with the second information processing device. The storage control unit updates the database based on the data distribution file of the store associated with the second information processing device.

Hereinafter, embodiments will be described with reference to the drawings.

Hereinafter, embodiments will be described with reference to the drawings. In the drawings, the same components are denoted by the same reference numerals as much as possible, and redundant description is omitted.

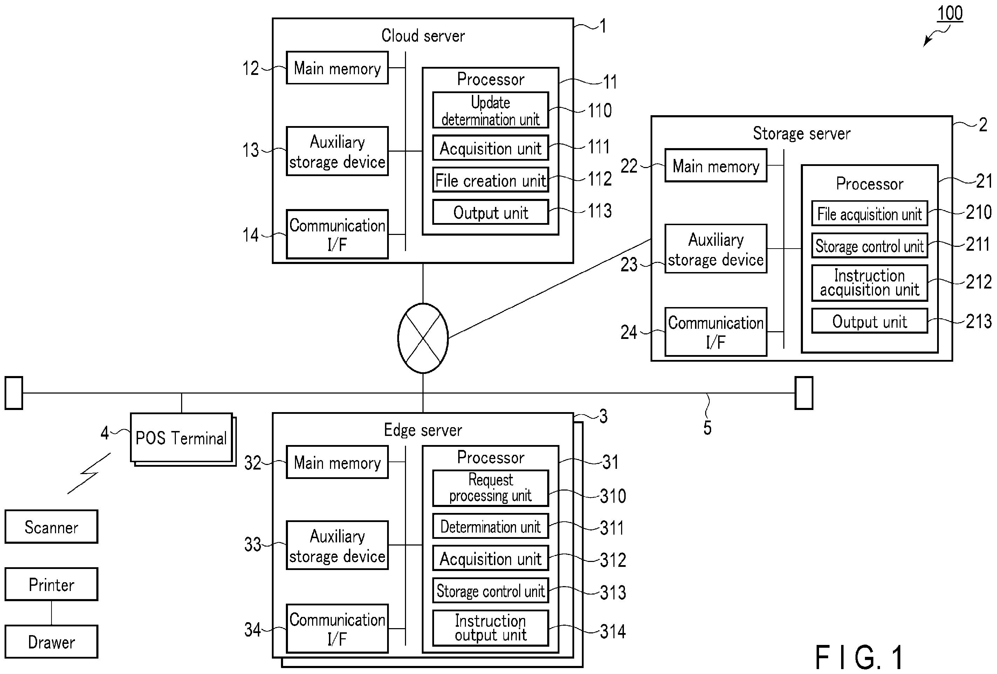

FIG. 1 is a block diagram illustrating an information processing system 100 according to an embodiment.

The information processing system 100 includes a cloud server 1, a storage server 2, an edge server 3, and a POS terminal 4. The cloud server 1, the storage server 2, and the edge server 3 are communicably connected to each other via a network. For example, the network includes one or more networks among various networks such as the Internet, a mobile communication network, and a local area network (LAN). The one or more networks may include a wireless network or a wired network. Note that the information processing system 100 may refer to a system including at least two devices among the cloud server 1, the storage server 2, and the edge server 3.

The edge server 3 and the POS terminal 4 are connected to a network 5 such as a local area network (LAN). The POS terminal 4 includes a wireless unit. The POS terminal 4 is connected to peripheral devices such as a scanner, a printer, and a drawer via a wireless unit. The POS terminal 4 may be, for example, a dedicated terminal, a tablet terminal, a smartphone, a personal computer (PC), or the like. There may be a plurality of edge servers 3 and a plurality of POS terminals 4 in a store.

The cloud server 1 is an electronic apparatus that collects data and processes the collected data. The electronic apparatus includes a computer. The cloud server 1 is communicably connected to the storage server 2 and the edge server 3 via a network. The edge server 3 can be used by, for example, a store clerk or the like in a commercial facility or the like. The cloud server 1 receives various data from the storage server 2 and the edge server 3, and outputs various data to the storage server 2 and the edge server 3. A configuration example of the cloud server 1 will be described later. The cloud server 1 is an example of an information processing device. The cloud server 1 is an example of a first information processing device. The clerk may be read as a user or a person.

The storage server 2 is an electronic apparatus that collects data and processes the collected data. The electronic apparatus includes a computer. The storage server 2 is communicably connected to the cloud server 1 and the edge server 3 via a network. The storage server 2 receives various data from the storage server 2 and the edge server 3, and outputs various data to the storage server 2 and the edge server 3. A configuration example of the storage server 2 will be described later. The storage server 2 is an example of an information processing device.

The edge server 3 is an electronic apparatus that collects data and processes the collected data. The electronic apparatus includes a computer. The edge server 3 is communicably connected to the cloud server 1 and the storage server 2 via a network. The edge server 3 receives various data from the cloud server 1 and the storage server 2, and outputs various data to the cloud server 1 and the storage server 2. A configuration example of the edge server 3 will be described later. The edge server 3 is an example of an information processing device. The edge server 3 is an example of a second information processing device. An application of a cash register function is installed in the edge server 3, and the POS terminal 4 can perform a cash register operation in cooperation with the edge server 3 using a graphical user interface (GUI) application.

A configuration example of the cloud server 1 will be described.

The cloud server 1 is an electronic apparatus including a processor 11, a main memory 12, an auxiliary storage device 13, and a communication interface 14. The units constituting the cloud server 1 are connected to each other so as to be able to input and output signals. In FIG. 1, the interface is described as an "I/F".

The processor 11 corresponds to a central part of the cloud server 1. The processor 11 is an element constituting a computer of the cloud server 1. The processor 11 may be, for example, a processing circuit such as a central processing unit (CPU), a graphics processing unit (GPU), an application specific integrated circuit (ASIC), or a programmable logic device (for example, a simple programmable logic device (SPLD), a complex programmable logic device (CPLD), or a field programmable gate array (FPGA)). The processor 11 is not limited to being configured as a single processing circuit, and may be configured as the processor 11 by combining a plurality of processing circuits. The processor 11 may include various circuits. The processor 11 develops a program stored in advance in the main memory 12 or the auxiliary storage device 13 in the main memory 12. The program is a program that allows the processor 11 of the cloud server 1 to implement or execute each unit described later. The processor 11 executes various operations by executing a program developed in the main memory 12.

The main memory 12 corresponds to a main storage part of the cloud server 1. The main memory 12 is an element constituting a computer of the cloud server 1. The main memory 12 includes a nonvolatile memory area and a volatile memory area. The main memory 12 stores an operating system or a program in a nonvolatile memory area. The main memory 12 uses the volatile memory area as a work area in which data is appropriately rewritten by the processor 11. For example, the main memory 12 includes a read only memory (ROM) as a nonvolatile memory area. For example, the main memory 12 includes a random access memory (RAM) as a volatile memory area. The main memory 12 stores a program.

The auxiliary storage device 13 corresponds to an auxiliary storage part of the cloud server 1. The auxiliary storage device 13 is an element constituting a computer of the cloud server 1. The auxiliary storage device 13 is an electrically erasable programmable read-only memory (EEPROM) (registered trademark), a hard disc drive (HDD), a solid state drive (SSD), or the like. The auxiliary storage device 13 stores the above-described program, data used when the processor 11 performs various types of processing, and data generated by processing in the processor 11. The auxiliary storage device 13 stores the above-described program. The auxiliary storage device 13 is an example of a storage unit.

The auxiliary storage device 13 includes a product master storage area. The product master storage area stores product masters of a plurality of stores. The product master storage area manages the product masters of the plurality of stores. The product master is a collection of product records. The product record includes a company code, a store code, a terminal code, product information, and the like. The company code is unique identification information assigned to each type of company to classify the company. The types of companies include, for example, restaurants, clothing stores, supermarkets, and the like. The store code is unique identification information assigned to each store to individually identify the store. The terminal code is unique identification information allocated to each edge server 3 to individually identify the edge server 3. The product information includes various data related to the product created for each product sold in each store. The product information includes product identification information, a product amount, and the like. The product identification information is unique identification information assigned to each product to individually identify the product. The product master can be updated every time the product information or the like of each store is updated. The product master may include a time stamp indicating a date and time when the product information or the like is updated. The product master is an example of a database.

The auxiliary storage device 13 includes a promotion information storage area. The promotion information storage area stores promotion information of a plurality of stores. The promotion information includes product discount information and the like. The promotion information can be updated every time the product discount information or the like is updated. The promotion information may include a time stamp indicating a date and time when the discount information or the like is updated. The promotion information of the plurality of stores is an example of data of the plurality of stores.

The auxiliary storage device 13 includes a peripheral device information storage area. The peripheral device information storage area stores peripheral device information. The peripheral device information is information of peripheral devices connected to the respective POS terminals 4 of a plurality of stores. The peripheral device includes, for example, a scanner, a printer, a drawer, and the like. The peripheral device information includes information related to connection setting. The peripheral device may be connected to the information processing terminal via a network. The network includes, for example, a local area network (LAN), Bluetooth (registered trademark), Wi-Fi (registered trademark), and the like. The peripheral device information may be updated every time the peripheral device information is updated. The peripheral device information may include a time stamp indicating a date and time when the peripheral device information is updated. The peripheral device information of the plurality of stores is an example of data of the plurality of stores.

The communication interface 14 includes various interfaces that communicably connect the cloud server 1 to another electronic apparatus via a network according to a predetermined communication protocol.

Note that the hardware configuration of the cloud server 1 is not limited to the above-described configuration. The cloud server 1 can appropriately omit and change the above-described components and add a new component.

Each unit implemented in the above-described processor 11 will be described.

The processor 11 implements an update determination unit 110, an acquisition unit 111, a file creation unit 112, and an output unit 113. Each unit implemented in the processor 11 can also be referred to as each function. It can also be said that each unit implemented in the processor 11 is implemented in a control unit including the processor 11 and the main memory 12.

The update determination unit 110 determines whether the product master stored in the product master storage area has been updated. The update determination unit 110 may acquire an update event that reports an update issued when update processing of the product master is performed in the auxiliary storage device 13. The update determination unit 110 may determine whether the product master has been updated based on the update event.

When the product master is updated, the acquisition unit 111 acquires update data from the product master storage area based on the update to the product master. The update data includes an updated product record. The update data may be a product master for each store that includes the updated product record. The acquisition unit 111 acquires update data for each store. The acquisition unit 111 may acquire the update data every time the product master is updated. The acquisition unit 111 may acquire update data in response to an update event. The acquisition unit 111 may acquire the update data at predetermined time intervals. The update data includes data updated from a time of acquisition of previous update data to a time of acquisition of current update data. The acquisition unit 111 may acquire all the data updated from the time of acquisition of the previous update data to the time of acquisition of the current update data, or may acquire only the latest data for each record. The update data may include a time stamp indicating a date and time when the data is updated.

The file creation unit 112 creates a data distribution file for each store based on the acquired update data. The file creation unit 112 identifies at least one of the company, the store, or the edge server 3 from the identification information included in the update data. The identification information includes a company code, a store code, and a terminal code. The file creation unit 112 creates a data distribution file for each store based on the identification information. The data distribution file includes update data associated with each store delivered to each store. The data distribution file may include update data associated with each company, each store, or each edge server. For example, the data distribution file associated with an edge server "aaa" arranged in a store "111" of a company "A" includes update data associated with the company "A", the store "111", and the edge server "aaa". The file creation unit 112 may create the data distribution file for each store based on the identification information. The file creation unit 112 may create the data distribution file for each store as a data distribution file associated with the edge server 3. The file creation unit 112 may create the data distribution file for each edge server 3. The file creation unit 112 may create the data distribution file for each edge server 3 as a data distribution file associated with the edge server 3.

In one example, the file creation unit 112 creates the data distribution file every time the product master is updated. In this case, the file creation unit 112 may create a plurality of data distribution files associated with each edge server 3. The plurality of data distribution files is managed by, for example, a time stamp of update data. In another example, the file creation unit 112 updates the data distribution file every time the product master is updated. In this case, the file creation unit 112 may overwrite the data distribution file associated with each edge server 3 as needed. The file creation unit 112 creates a data distribution file including a latest product record.

In each store, the edge server 3 updates the data stored in an auxiliary storage device 33 based on the data distribution file. The data distribution file may include information indicating whether or not synchronization is completed in the edge server 3. The "synchronization" includes updating the product master stored in the auxiliary storage device of the edge server 3 based on the data distribution file. In the following description, "synchronization" includes updating, adding, deleting, and changing. The data distribution file includes identification information such as a company code, a store code, and a terminal code. The data distribution file may include identification information capable of individually identifying the data distribution file.

The output unit 113 outputs the data distribution file created by the file creation unit 112 to the storage server 2 via the communication interface 14 so as to be stored in an auxiliary storage device 23. The storage server 2 stores the data distribution file in the auxiliary storage device 23. The storage server 2 stores the data distribution file in an area allocated to each store. The storage server 2 may store the data distribution file in an area allocated for each edge server 3.

A configuration example of the storage server 2 will be described.

The storage server 2 is an electronic apparatus including a processor 21, a main memory 22, an auxiliary storage device 23, and a communication interface 24. The units constituting the storage server 2 are connected to each other so as to be able to input and output signals. The storage server 2 is an example of a storage device. The auxiliary storage device 23 is an example of a storage unit.

The processor 21 corresponds to a central part of the storage server 2. The processor 21 is an element constituting a computer of the storage server 2. The processor 21 has a hardware configuration similar to that of the processor 11 described above. The processor 21 executes various operations by executing a program stored in advance in the main memory 22 or the auxiliary storage device 23.

The main memory 22 corresponds to a main storage part of the storage server 2. The main memory 22 is an element constituting a computer of the storage server 2. The main memory 22 has a hardware configuration similar to that of the main memory 12 described above. The main memory 22 stores a program.

The auxiliary storage device 23 corresponds to an auxiliary storage part of the storage server 2. The auxiliary storage device 23 is an element constituting a computer of the storage server 2. The auxiliary storage device 23 has a hardware configuration similar to that of the auxiliary storage device 13 described above. The auxiliary storage device 23 stores the above-described program.

The auxiliary storage device 23 includes an area allocated to each company. The area allocated to each company include areas allocated to at least one store included in each company. The area includes an area allocated to at least one edge server 3 included in each store. The area allocated to each edge server 3 may include, for example, a distribution file directory and a synchronization completion directory. The distribution file directory includes update data to be distributed to the corresponding edge server 3. The synchronization completion directory includes update data for which synchronization is completed in the corresponding edge server 3. The synchronization completion directory is also simply referred to as a completion directory. The auxiliary storage device 23 stores the data distribution file based on, for example, identification information included in the data distribution file. The auxiliary storage device 23 is an example of a storage device.

The communication interface 24 includes various interfaces that communicably connect the storage server 2 to other devices via a network according to a predetermined communication protocol. The storage server 2 can be connected to a peripheral device via the communication interface 24.

The display device 25 is a device capable of displaying various images under the control of the processor 21. For example, the display device 25 is a liquid crystal display, an electroluminescence (EL) display, or the like.

Note that the hardware configuration of the storage server 2 is not limited to the above-described configuration. The storage server 2 can appropriately omit and change the above-described components and add a new component.

Each unit implemented in the above-described processor 21 will be described.

The processor 21 implements a file acquisition unit 210, a storage control unit 211, an instruction acquisition unit 212, and an output unit 213. Each unit implemented in the processor 21 can also be referred to as each function. It can also be said that each unit implemented in the processor 21 is implemented in a control unit including the processor 21 and the main memory 22.

The file acquisition unit 210 acquires the data distribution file from the cloud server 1 via the communication interface 24.

The storage control unit 211 allows the data distribution file to be stored in the auxiliary storage device 23. The storage control unit 211 allows the data distribution file to be stored in an area allocated for each company, each store, and each edge server based on the identification information included in the data distribution file. The storage control unit 211 updates the data distribution file based on an update instruction from the edge server 3. The update instruction includes a movement instruction to move the data distribution file from the distribution file direct to the synchronization completion directory. The update instruction includes a deletion instruction for deleting the data distribution file. The storage control unit 211 moves the data distribution file from the distribution file direct to the synchronization completion directory based on the movement instruction. The storage control unit 211 may delete the data distribution file from the distribution file direct based on a deletion instruction from the edge server 3. The storage control unit 211 may delete the data distribution file from the auxiliary storage device 23 based on the deletion instruction from the edge server 3.

The instruction acquisition unit 212 acquires a request from the edge server 3 via the communication interface 24. The request may be periodically output from the edge server 3, for example. The request indicates a request regarding the presence or absence of a data distribution file in a specific area of the auxiliary storage device 23. The request includes at least one of a company code, a store code, or a terminal code of the edge server 3 corresponding to the edge server 3. The specific area includes, for example, an area allocated to the edge server 3. The specific area includes an area assigned to a store associated with the edge server 3. The instruction acquisition unit 212 determines the specific area based on at least one of the company code, the store code, or the terminal code of the edge server 3 included in the request. In response to the request, the instruction acquisition unit 212 determines whether there is a data distribution file in the specific area.

The instruction acquisition unit 212 acquires an instruction from the edge server 3 via the communication interface 24. The instruction includes an output instruction for outputting the data distribution file to the edge server 3. The instruction includes an update instruction for updating the data distribution file. The update instruction includes a movement instruction to move the data distribution file from the distribution file direct to the synchronization completion directory. The update instruction includes a deletion instruction for deleting the data distribution file.

The output unit 213 outputs a response to the request from the edge server 3 via the communication interface 24. The output unit 213 outputs a response related to the presence or absence of a data distribution file in the specific area. The output unit 213 may output a response only when there is a data distribution file in the specific area. The output unit 213 may output an empty response when there is no data distribution file in the specific area.

The output unit 213 outputs the data distribution file to the edge server 3 via the communication interface 24. The output unit 213 may output the data distribution file based on an output instruction from the edge server 3. The output unit 213 may output the data distribution file based on a request from the edge server 3. The output unit 213 may output all data distribution files associated with the edge server 3. The output unit 213 may output a latest data distribution file among the data distribution files associated with the edge server 3. The output unit 213 may output all data distribution files associated with the store associated with the edge server 3. The output unit 213 may output a latest data distribution file among the data distribution files associated with the store associated with the edge server 3.

A configuration example of the edge server 3 will be described.

The edge server 3 is an electronic apparatus including a processor 31, a main memory 32, an auxiliary storage device 33, and a communication interface 34. The units constituting the edge server 3 are connected to each other so as to be able to input and output signals.

The processor 31 corresponds to a central part of the edge server 3. The processor 31 is an element constituting a computer of the edge server 3. The processor 31 has a hardware configuration similar to that of the processor 11 described above. The processor 31 executes various operations by executing a program stored in advance in the main memory 32 or the auxiliary storage device 33.

The main memory 32 corresponds to a main storage part of the edge server 3. The main memory 32 is an element constituting the computer of the edge server 3. The main memory 32 has a hardware configuration similar to that of the main memory 12 described above. The main memory 32 stores a program.

The auxiliary storage device 33 corresponds to an auxiliary storage part of the edge server 3. The auxiliary storage device 33 is an element constituting the computer of the edge server 3. The auxiliary storage device 33 has a hardware configuration similar to that of the auxiliary storage device 13 described above. The auxiliary storage device 33 stores the above-described program.

The auxiliary storage device 33 includes a product master storage area. The product master storage area stores the product master of the store associated with the edge server 3. The product master is an example of a database.

The auxiliary storage device 33 includes a promotion information storage area. The promotion information storage area stores promotion information of the store associated with the edge server 3.

The auxiliary storage device 13 includes a peripheral device information storage area. The peripheral device information storage area stores peripheral device information. The peripheral device information is information of peripheral devices connected to each POS terminal 4 of the store associated with the edge server 3.

The communication interface 34 includes various interfaces that communicably connect the edge server 3 to other devices via a network according to a predetermined communication protocol. The edge server 3 can be connected to a peripheral device via the communication interface 34.

Note that the hardware configuration of the edge server 3 is not limited to the above-described configuration. In the edge server 3, the above-described components can be appropriately omitted and changed, and a new component can be added.

Each unit implemented in the above-described processor 31 will be described.

The processor 31 implements a request processing unit 310, a determination unit 311, an acquisition unit 312, a storage control unit 313, and an instruction output unit 314. Each unit implemented in the processor 31 can also be referred to as each function. It can also be said that each unit implemented in the processor 31 is implemented in a control unit including the processor 31 and the main memory 32.

The request processing unit 310 outputs a request regarding the presence or absence of a data distribution file to the storage server 2 via the communication interface 34. The request includes a request regarding the presence or absence of a data distribution file of the store associated with the edge server 3. The request includes a request regarding the presence or absence of a data distribution file associated with the edge server 3. The request processing unit 310 may output requests at predetermined intervals. The predetermined intervals include, for example, time intervals such as every five minutes. The request processing unit 310 acquires a response to the request from the storage server 2 via the communication interface 34. The response to the request includes a "present" response indicating that a data distribution file is present. The response to the request includes an "absent" response indicating that a data distribution file is absent.

The determination unit 311 determines the presence or absence of the data distribution file in the specific area based on the response from the storage server 2 to the request.

In a case where the data distribution file of the store associated with the edge server 3 is stored in the storage server 2, the acquisition unit 312 acquires the data distribution file of the store associated with the edge server 3. The acquisition unit 312 acquires the data distribution file from the storage server 2 via the communication interface 34. The acquisition unit 312 may acquire all data distribution files of the store associated with the edge server 3. The acquisition unit 312 may acquire all data distribution files associated with the edge server 3. The acquisition unit 312 may acquire the latest data distribution file of the store associated with the edge server 3. The acquisition unit 312 may acquire the latest data distribution file associated with the edge server 3.

The storage control unit 313 updates the product master stored in the auxiliary storage device 33 based on the data distribution file. The update includes deleting, adding, overwriting, changing, and the like of the product record. The storage control unit 313 synchronizes the product master with the product master of the cloud server 1 based on the data distribution file.

The instruction output unit 314 outputs an output instruction of the data distribution file to the storage server 2 via the communication interface 34. The instruction output unit 314 outputs an update instruction of the data distribution file to the storage server 2 via the communication interface 34. The update instruction includes a movement instruction to move the data distribution file from the distribution file directory to the synchronization completion directory. The update instruction includes a deletion instruction to delete the data distribution file from the distribution file directory. The update instruction includes a deletion instruction to delete the data distribution file from the auxiliary storage device 23.

A configuration example of the product master stored in the auxiliary storage device 13 of the cloud server 1 will be described.

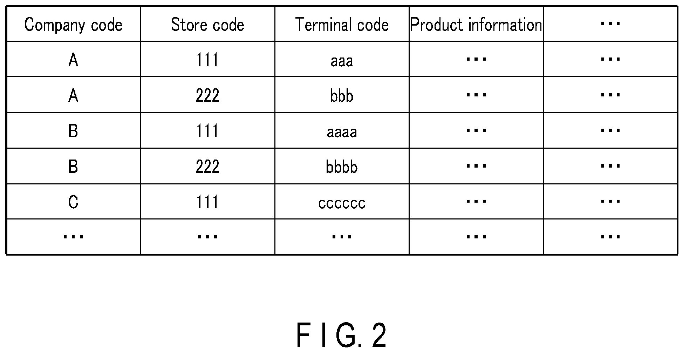

FIG. 2 is a diagram illustrating an example of a data structure of a product master according to the embodiment.

The product master includes one or more product records. A product record includes data in which a company code, a store code, a terminal code, product information, and the like are associated with each other.

For example, a record of a company code "A", a store code "111", and a terminal code "aaa" indicates that identification information of the edge server 3 used in the store "111" included in the company classified as A is "aaa". The record includes product information associated with the edge server 3 "aaa". The product master includes records of product masters associated with a plurality of companies and a plurality of stores.

When the product master is updated, the update determination unit 110 of the cloud server 1 determines the presence or absence of an update based on the identification information associated with the updated record.

Note that the product master stored in the auxiliary storage device 33 of the edge server 3 has a data structure similar to the data structure of the product master illustrated in FIG. 2. The product master stored in the auxiliary storage device 33 includes a company code, a store code, a terminal code, product information, and the like corresponding to the edge server 3.

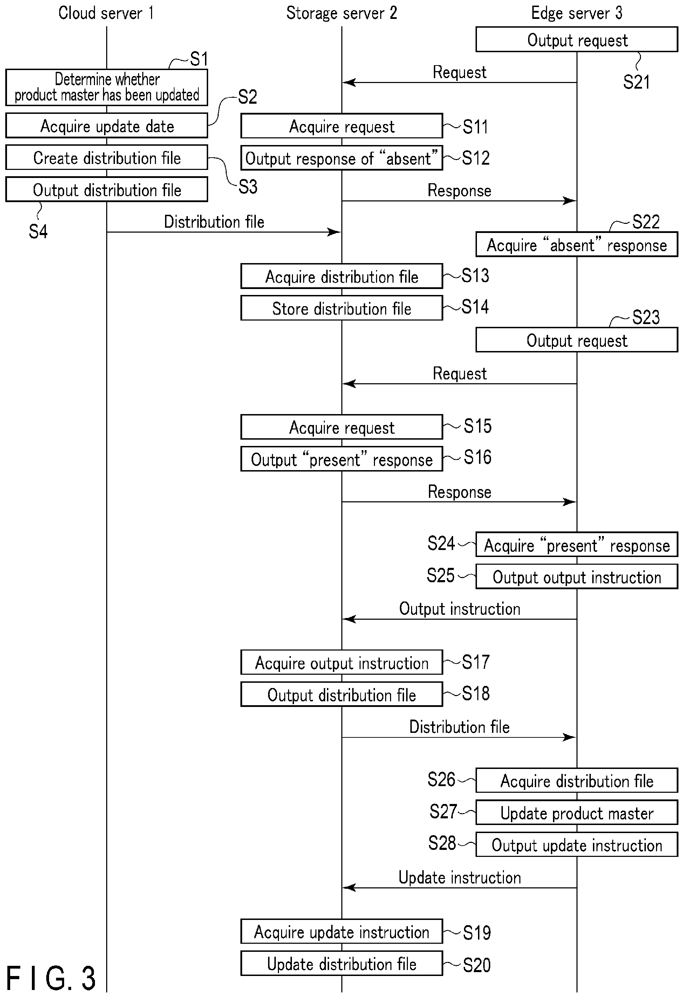

FIG. 3 is a sequence diagram illustrating a procedure of information processing by the information processing system according to the embodiment.

The request processing unit 310 of the edge server 3 outputs a request regarding the presence or absence of the data distribution file to the storage server 2 (S21).

The instruction acquisition unit 212 of the storage server 2 acquires the request from the edge server 3 (S11).

The output unit 213 of the storage server 2 outputs a response to the request from the edge server 3 (S12). Here, it is assumed that the data distribution file of the store associated with the edge server 3 is not stored in the storage server 2. In this case, the output unit 213 outputs an "absent" response to the edge server 3.

The request processing unit 310 of the edge server 3 acquires the "absent" response to the request from the storage server 2 (S22).

The update determination unit 110 of the cloud server 1 determines whether the product master stored in the product master storage area has been updated (S1). Here, it is assumed that the update determination unit 110 determines that the product master has been updated.

The acquisition unit 111 of the cloud server 1 acquires update data from the product master storage area based on the update to the product master (S2).

The file creation unit 112 of the cloud server 1 creates a data distribution file for each store based on the acquired update data (S3).

The output unit 113 of the cloud server 1 outputs the data distribution file created by the file creation unit 112 to the storage server 2 so as to be stored in the auxiliary storage device 23 (S4).

The file acquisition unit 210 of the storage server 2 acquires the data distribution file from the cloud server 1 (S13).

The storage control unit 211 of the storage server 2 allows the data distribution file to be stored in the auxiliary storage device 23 (S14).

The request processing unit 310 of the edge server 3 outputs the request to the storage server 2 after a lapse of a certain time from the output of the request regarding the presence or absence of the data distribution file (S23).

The instruction acquisition unit 212 of the storage server 2 acquires the request from the edge server 3 (S15).

The output unit 213 of the storage server 2 outputs a response to the request from the edge server 3 (S16). Here, it is assumed that the data distribution file of the store associated with the edge server 3 is stored in the storage server 2. In this case, the output unit 213 outputs a "present" response to the edge server 3.

The request processing unit 310 of the edge server 3 acquires the "present" response to the request from the storage server 2 (S24).

The instruction output unit 314 of the edge server 3 outputs the output instruction of the data distribution file to the storage server 2 (S25).

The instruction acquisition unit 212 of the storage server 2 acquires the output instruction of the data distribution file from the edge server 3 (S17).

The output unit 213 of the storage server 2 outputs the data distribution file of the store associated with the edge server 3 to the edge server 3 (S18).

The acquisition unit 312 of the edge server 3 acquires the data distribution file of the store associated with the edge server 3 (S26).

The storage control unit 313 of the edge server 3 updates the product master stored in the auxiliary storage device 33 based on the data distribution file (S27).

The instruction output unit 314 of the edge server 3 outputs an update instruction of the data distribution file to the storage server 2 (S28).

The instruction acquisition unit 212 of the storage server 2 acquires an update instruction for updating the data distribution file from the edge server 3 (S19).

The storage control unit 211 of the storage server 2 updates the data distribution file based on the update instruction from the edge server 3 (S20).

Hereinafter, a procedure of processing by the information processing system 100 will be described.

Note that, in the following description based on the cloud server 1, the cloud server 1 may be replaced with the processor 11. In the description based on the storage server 2, the storage server 2 may be replaced with the processor 21. In the description based on the edge server 3, the edge server 3 may be replaced with the processor 31.

Note that the processing procedure described below is merely an example, and each processing may be changed to the extent possible. In addition, regarding the processing procedure described below, it is possible to appropriately omit, replace, and add steps according to the embodiment.

In the following description, it is assumed that the edge server 3 of the terminal code "aaa" synchronizes with the product master of the cloud server 1 in the store of the company code "A" and the store code "111". The cloud server 1 outputs the data distribution file to the storage server 2. The edge server 3 acquires the data distribution file from the storage server 2 and updates the product master stored in the auxiliary storage device 33.

Data distribution file creation processing by the cloud server 1 will be described.

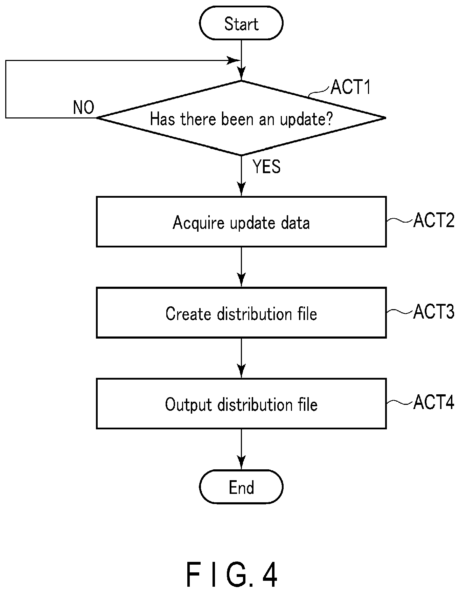

FIG. 4 is a flowchart illustrating an example of a procedure of information processing by the cloud server 1 according to the embodiment.

The update determination unit 110 determines whether the product master stored in the auxiliary storage device 13 has been updated (ACT 1). In ACT 1, for example, the update determination unit 110 determines whether the product master has been updated based on an update event output based on the update to the auxiliary storage device 13. When the update determination unit 110 determines that the product master has been updated (ACT 1: YES), the processing shifts from ACT 1 to ACT 2. When the update determination unit 110 determines that the product master has not been updated (ACT 1: NO), the processing repeats ACT 1. The update to the product master includes an update to the product record. The update to the product master includes an update to at least one record among a plurality of companies managed by the cloud server 1 and product masters of a plurality of stores. Note that the update determination unit 110 may periodically monitor the auxiliary storage device 13 to determine whether the product master has been updated.

The acquisition unit 111 acquires update data from the product master storage area based on the update to the product master (ACT 2). In ACT 2, for example, the acquisition unit 111 acquires an updated product record. The acquisition unit 111 may acquire the product master of the store including the updated product record. Note that the acquisition unit 111 may acquire the update data every time the product master is updated, or may acquire the update data at predetermined time intervals. The acquisition unit 111 may acquire all pieces of the update data or may acquire only the latest piece of data for each record.

The file creation unit 112 creates a data distribution file based on the acquired update data (ACT 3). In ACT 3, for example, the file creation unit 112 creates a data distribution file for each company, each store, or each edge server based on the identification information of the update data. For example, it is assumed that the product master associated with the edge server 3 of the terminal code "aaa" is updated. In this case, the file creation unit 112 creates the data distribution file associated with the edge server 3 of the terminal code "aaa". The data distribution file associated with the edge server 3 of the terminal code "aaa" is included in the data distribution file of the store of the store code "111". The file creation unit 112 may create a data distribution file associated with each store.

The output unit 113 outputs the data distribution file to the storage server 2 so as to be stored in the auxiliary storage device 23 (ACT 4). In ACT 4, for example, the output unit 113 outputs the data distribution file to the storage server 2. The storage server 2 stores the data distribution file in a corresponding area of the auxiliary storage device 23 based on the identification information.

Processing related to the data distribution file by the storage server 2 will be described.

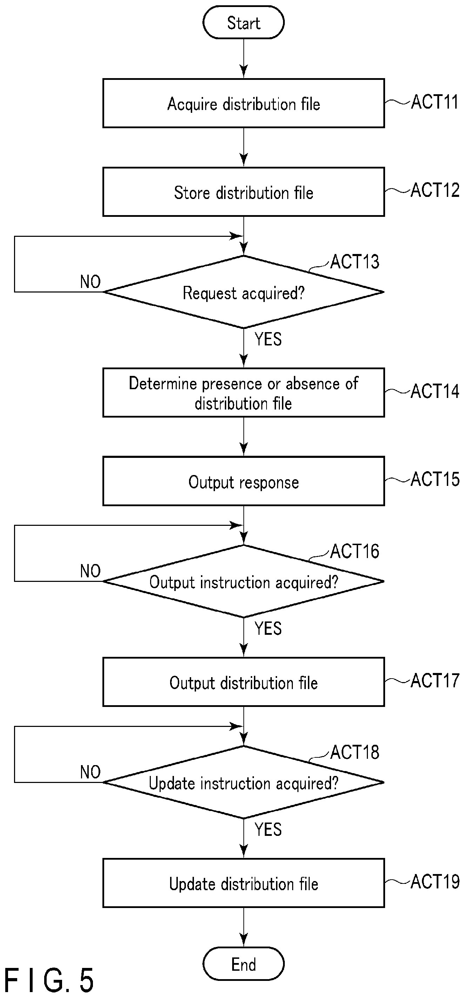

FIG. 5 is a flowchart illustrating an example of a procedure of information processing by the storage server 2 according to the embodiment.

The file acquisition unit 210 acquires the data distribution file output from the cloud server 1 (ACT 11).

The storage control unit 211 allows the data distribution file to be stored in the auxiliary storage device 23 (ACT 12). In ACT 12, for example, the storage control unit 211 stores the data distribution file in the corresponding area based on the identification information of the data distribution file. For example, in a case where the data distribution file has the company code "A", the store code "111", and the terminal code "aaa", the storage control unit 211 stores the data distribution file in the area assigned to the edge server 3 of the company code "A", the store code "111", and the terminal code "aaa". The storage control unit 211 allows the data distribution file to be stored in the auxiliary storage device 23 in association with each company, each store, or each edge server.

The instruction acquisition unit 212 determines whether or not a request regarding the presence or absence of the data distribution file has been acquired from the edge server 3 (ACT 13). When the instruction acquisition unit 212 determines that the request has been acquired (ACT 13: YES), the processing transitions from ACT 13 to ACT 14. When the instruction acquisition unit 212 determines that the request has not been acquired (ACT 13: NO), the processing repeats ACT 13.

The instruction acquisition unit 212 determines the presence or absence of the data distribution file of the store associated with the edge server 3 (ACT 14). In ACT 14, for example, the instruction acquisition unit 212 determines the presence or absence of the data distribution file in the specific area associated with the edge server 3 based on at least one of the company code, the store code, or the terminal code of the edge server 3 included in the request. The specific area associated with the edge server 3 may be an area allocated to the edge server 3 or an area allocated to a store associated with the edge server 3.

The output unit 213 outputs a response to the request from the edge server 3 (ACT 15). In ACT 15, for example, the output unit 213 outputs a response regarding the presence or absence of the data distribution file of the store associated with the edge server 3. In ACT 14, when the instruction acquisition unit 212 determines that the data distribution file is present, the output unit 213 outputs a "present" response indicating that the data distribution file is present. In ACT 14, when the instruction acquisition unit 212 determines that the data distribution file is absent, the output unit 213 outputs an "absent" response indicating that the data distribution file is absent.

The instruction acquisition unit 212 determines whether or not an output instruction has been acquired from the edge server 3 (ACT 16). Based on the response to the request output by the output unit 213, the edge server 3 outputs the output instruction when the data distribution file is present in the specific area assigned to the store associated with the edge server 3. When the output instruction has been acquired by the instruction acquisition unit 212 (ACT 16: YES), the processing transitions from ACT 16 to ACT 17. When the output instruction has not been acquired by the instruction acquisition unit 212 (ACT 16: NO), the processing repeats ACT 16. Note that, in a case where the output instruction is included in the request regarding the presence or absence of the data distribution file from the edge server 3, the instruction acquisition unit 212 may determine that the output instruction has been given based on the request. In this case, ACT 16 can be omitted.

The output unit 213 outputs the data distribution file to the edge server 3 (ACT 17). In ACT 17, for example, the output unit 213 outputs the data distribution file associated with the edge server 3 to the edge server 3. The output unit 213 may output all of the data distribution files associated with the edge server 3 to the edge server 3, or may output only the latest data distribution file associated with the edge server 3 to the edge server 3.

The instruction acquisition unit 212 determines whether or not an update instruction has been acquired from the edge server 3 (ACT 18). When the update instruction has been acquired by the instruction acquisition unit 212 (ACT 18: YES), the processing transitions from ACT 18 to ACT 19. When the update instruction has not been acquired by the instruction acquisition unit 212 (ACT 18: NO), the processing repeats ACT 18.

The storage control unit 211 updates the data distribution file based on the update instruction from the edge server 3 (ACT 19). In ACT 19, for example, when acquiring the movement instruction from the edge server 3, the storage control unit 211 moves the data distribution file associated with the edge server 3 from the distribution file direct to the synchronization completion directory. When acquiring the deletion instruction from the edge server 3, the storage control unit 211 deletes the data distribution file associated with the edge server 3. The storage control unit 211 may delete the data distribution file associated with the edge server 3 from the distribution file direct or may delete the data distribution file from the auxiliary storage device 23. The data distribution file associated with the edge server 3 corresponds to the data distribution file output to the edge server 3. Thus, the storage server 2 can determine the presence or absence of the data distribution file to be output to the edge server 3.

Processing related to synchronization of the product masters in the edge server 3 will be described.

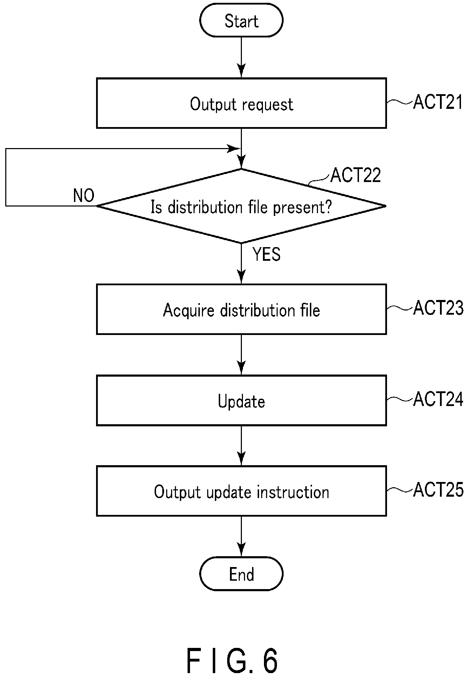

FIG. 6 is a flowchart illustrating an example of a procedure of information processing by the edge server 3 according to the embodiment.

The request processing unit 310 outputs a request regarding the presence or absence of the data distribution file to the storage server 2 (ACT 21). In ACT 21, for example, the request processing unit 310 outputs a request regarding the presence or absence of the data distribution file associated with the edge server 3 at a predetermined interval.

The determination unit 311 determines the presence or absence of the data distribution file associated with the edge server 3 (ACT 22). In ACT 22, for example, the determination unit 311 acquires a response from the storage server 2 to the request output by the request processing unit 310. The determination unit 311 determines the presence or absence of the data distribution file associated with the edge server 3 based on the response from the storage server 2. When the determination unit 311 determines that the data distribution file associated with the edge server 3 is present (ACT 22: YES), the processing proceeds from ACT 22 to ACT 23. When the determination unit 311 determines that the data distribution file associated with the edge server 3 is absent (ACT 22: NO), the processing repeats ACT 22.

The acquisition unit 312 acquires the data distribution file associated with the edge server 3 from the storage server 2 (ACT 23). In ACT 23, for example, the acquisition unit 312 acquires the data distribution file of the area allocated to the edge server 3 of the terminal code "aaa" from the storage server 2. In one example, the acquisition unit 312 acquires all the data distribution files associated with the edge server 3. In another example, the acquisition unit 312 acquires the latest data distribution file associated with the edge server 3.

The storage control unit 313 updates the product master stored in the auxiliary storage device 33 based on the acquired data distribution file (ACT 24). In ACT 24, for example, the storage control unit 313 allows the data distribution file to be stored in the auxiliary storage device 33. When a plurality of data distribution files is acquired by the acquisition unit 312, the storage control unit 313 allows the latest data distribution file to be stored in the auxiliary storage device 33 based on time stamps or the like included in the data distribution files. When the latest data distribution file is acquired by the acquisition unit 312, the storage control unit 313 allows the acquired latest data distribution file to be stored in the auxiliary storage device 33. Allowing the data distribution file to be stored in the auxiliary storage device 33 includes deleting, adding, overwriting, and changing the product master stored in the auxiliary storage device 33 based on the data distribution file.

The instruction output unit 314 outputs an update instruction of the data distribution file to the storage server 2 (ACT 25). In ACT 25, for example, the instruction output unit 314 outputs a movement instruction of the data distribution file to the storage server 2. In this case, the storage server 2 moves the data distribution file from the distribution file directory to the synchronization completion directory. The instruction output unit 314 may output a deletion instruction of the data distribution file to the storage server 2. In this case, the storage server 2 may delete the data distribution file from the distribution file directory. The storage server 2 may delete the data distribution file from the auxiliary storage device 23.

In the above-described example, the update to the product master has been described as an example, but the present invention is not limited thereto. The above-described embodiment is also applicable to an update to a database of promotion information, peripheral device information, or the like, in addition to the product master.

### (Effects)

The information processing system according to the embodiment includes the cloud server 1 and the edge server 3, and the cloud server 1 can acquire, based on an update to a database that manages data of a plurality of stores, update data for each of the stores from the database, create a data distribution file for each of the stores based on the update data for the each of the stores, and output the data distribution file created by the file creation unit so as to be stored in the storage device. In a case where the data distribution file of the store associated with the edge server 3 is stored in the storage device, the edge server 3 can acquire the data distribution file of the store associated with the edge server 3 and update the database based on the data distribution file of the store associated with the edge server 3.

For example, when the database such as the product master is updated, the cloud server 1 creates a data distribution file including update data for each store based on the update data, and outputs the data distribution file so as to be stored in a storage area of a storage device such as the storage server 2 distributed for each store. The storage server 2 stores the data distribution file in a storage area distributed for each store. The edge server 3 acquires the data distribution file of the store associated with the edge server 3, and updates the database such as the product master based on the acquired data distribution file.

For this purpose, the cloud server 1 creates the data distribution file for each store and allows the data distribution file to be stored in the storage server 2, so that the edge server 3 can acquire only the data distribution file of the store associated with the edge server 3 and synchronize the product master and the like. Thus, the information processing system can realize that the edge server 3 synchronizes only target update data. The edge server 3 can acquire only the target data, and the processing load can be reduced.

In addition, since the edge server 3 can acquire the update data without accessing the cloud server 1, access from the edge servers of a plurality of stores does not concentrate on the cloud server 1. Thus, the information processing system can implement synchronization with data on the cloud server by the edge server 3 without applying a load to the database of the cloud server 1.

In the information processing system according to the embodiment, the edge server 3 can output a request regarding the presence or absence of the data distribution file of the store associated with the edge server 3. Accordingly, the edge server 3 can acquire the data distribution file based on a response to the request. Thus, the information processing system can reduce the load of synchronization processing of the update data by the edge server 3.

In the information processing system according to the embodiment, the edge server 3 can output an update instruction of the data distribution file. Accordingly, the storage server 2 can update the data distribution file based on the update instruction. For example, the storage server 2 can move or delete the data distribution file between directories. Thus, the information processing system can prevent double synchronization by the edge server 3.

In the information processing system according to the embodiment, the cloud server 1 can create a data distribution file associated with the edge server 3 for each edge server. Accordingly, the information processing system can reduce the data amount of the data distribution file stored in the storage server 2.

In the information processing system according to the embodiment, the cloud server 1 can create the data distribution file every time the database is updated. Accordingly, the information processing system can simplify the processing of creating the data distribution file by the cloud server 1.

In the information processing system according to the embodiment, the cloud server 1 can update the data distribution file every time the database is updated. Accordingly, the cloud server 1 can create the data distribution file based on the latest update data. Thus, the information processing system can reduce the data amount of the data distribution file stored in the storage server 2.

In the information processing system according to the embodiment, the edge server 3 can acquire all the data distribution files associated with the edge server 3. Accordingly, the information processing system can simplify the acquisition processing of the data distribution file by the edge server 3.

In the information processing system according to the embodiment, the edge server 3 can acquire the latest data distribution file associated with the edge server 3. Accordingly, the information processing system can reduce the data amount of the data distribution file acquired by the edge server 3. In addition, the edge server 3 can synchronize the update data based on the latest data distribution file. Thus, the information processing system can simplify the synchronization processing by the edge server 3.

In the information processing system according to the embodiment, the edge server 3 can output a request at predetermined intervals. The edge server 3 can determine the presence or absence of the data distribution file based on a response to the request. Thus, the information processing system can easily determine the presence or absence of the update data.

In the information processing system according to the embodiment, the edge server 3 can output an update instruction to move the data distribution file to the completion directory. In addition, the edge server 3 can output an update instruction to delete the data distribution file. Accordingly, the storage server 2 can move or delete the data distribution file between directories based on the update instruction. Thus, the information processing system can prevent double synchronization by the edge server 3.

The information processing system according to the above-described embodiment may be expressed as follows.
(1) An information processing system including a first information processing device, a second information processing device, and a storage device, wherein
   the first information processing device includes:
   an acquisition unit configured to acquire, based on an update to a database that manages data of a plurality of stores, update data for each of the stores from the database;
   a file creation unit configured to create a data distribution file for each of the stores based on the update data for each of the stores; and
   an output unit configured to output the data distribution file created by the file creation unit so as to be stored in the storage device, and
   the second information processing device includes:
      an acquisition unit configured, in a case where a data distribution file of a store associated with the second information processing device is stored in the storage device, to acquire the data distribution file of the store associated with the second information processing device; and
      a storage control unit configured to update a database based on the data distribution file of the store associated with the second information processing device.
(2) The information processing system according to (1), wherein
   the second information processing device further includes:
   a request processing unit configured to output a request regarding a presence or an absence of a data distribution file of a store associated with the second information processing device.
(3) The information processing system according to (1) or (2), wherein
   the second information processing device further includes:
   an instruction output unit configured to output an update instruction of the data distribution file.
(4) The information processing system according to any one of (1) to (3), wherein
   the file creation unit of the first information processing device is configured to create the data distribution file associated with a second information processing device for each second information processing device.
(5) The information processing system according to any one of (1) to (4), wherein
   the file creation unit of the first information processing device is configured to create the data distribution file every time the database is updated.
(6) The information processing system according to any one of (1) to (5), wherein
   the file creation unit of the first information processing device is configured to update the data distribution file every time the database is updated.
(7) The information processing system according to (4), wherein
   the acquisition unit of the second information processing device is configured to acquire all data distribution files associated with the second information processing device.
(8) The information processing system according to (4), wherein
   the acquisition unit of the second information processing device is configured to acquire a latest data distribution file associated with the second information processing device.
(9) The information processing system according to (2), wherein
   the request processing unit of the second information processing device is configured to output the request at predetermined intervals.
(10) The information processing system according to (3), wherein
   the instruction output unit of the second information processing device is configured to output an update instruction to move the data distribution file to a completion directory.
(11) The information processing system according to (3), wherein
   the instruction output unit of the second information processing device is configured to output an update instruction to delete the data distribution file.

The first information processing device according to the above-described embodiment may be expressed as follows.
(1) A first information processing device including:
   an acquisition unit configured to acquire, based on an update to a database that manages data of a plurality of stores, update data for each of the stores from the database;
   a file creation unit configured to create a data distribution file for each of the stores based on the update data for the each of the stores; and
   an output unit configured to output the data distribution file created by the file creation unit so as to be stored in a storage device.
(2) The first information processing device according to (1), wherein
   the file creation unit is configured to create a data distribution file associated with a second information processing device for each second information processing device.
(3) The first information processing device according to (1) or (2), wherein
   the file creation unit is configured to create the data distribution file every time the database is updated.
(4) The first information processing device according to any one of (1) to (3), wherein
   the file creation unit is configured to update the data distribution file every time the database is updated.
(5) A recording medium recording an information processing program for causing a computer to execute:
   an acquisition function of acquiring, based on an update to a database that manages data of a plurality of stores, update data for each of the stores from a database;
   a file creation function of creating a data distribution file for each of the stores based on update data for the each of the stores; and
   an output function of outputting the created data distribution file so as to be stored in a storage device.

The second information processing device according to the above-described embodiment may be expressed as follows.
(1) A second information processing device including:
   an acquisition unit configured, in a case where a data distribution file of a store associated with the second information processing device is stored in a storage device, to acquire the data distribution file of the store associated with the second information processing device; and
   a storage control unit configured to update a database based on a data distribution file of the store associated with the second information processing device.
(2) The second information processing device according to (1), further including:
   a request processing unit configured to output a request regarding a presence or an absence of a data distribution file of a store associated with the second information processing device.
(3) The second information processing device according to (1) or (2), further including:
   an instruction output unit configured to output an update instruction of the data distribution file.
(4) The second information processing device according to any one of (1) to (3), wherein
   the acquisition unit is configured to acquire all data distribution files associated with the second information processing device.
(5) The second information processing device according to any one of (1) to (4), wherein
   the acquisition unit is configured to acquire a latest data distribution file associated with the second information processing device.
(6) The second information processing device according to (2), wherein
   the request processing unit is configured to output the request at predetermined intervals.
(7) The second information processing device according to (3), wherein
   the instruction output unit is configured to output an update instruction to move the data distribution file to a completion directory.
(8) The second information processing device according to (3), wherein the instruction output unit is configured to output an update instruction to delete the data distribution file.
(9) An information processing program for causing a computer to execute:
   an acquisition function of acquiring, in a case where a data distribution file of a store associated with a second information processing device is stored in a storage device, a data distribution file of a store associated with the second information processing device; and
   a storage control function of updating a database based on a data distribution file of the store associated with the second information processing device.

### (Other Embodiments)

The first information processing device may be implemented by an apparatus such as a cloud server 1, or may be implemented by a plurality of apparatuses in which functions are distributed.

The second information processing device may be implemented by an apparatus such as an edge server 3, or may be implemented by a plurality of apparatuses in which functions are distributed.

In the above-described embodiment, an example in which the cloud server 1 and the storage server 2 are implemented as independent apparatuses has been described, but the present invention is not limited thereto. The cloud server 1 and the storage server 2 may be implemented by an apparatus having the functions of the processor 11 and the processor 21. In this case, the apparatus includes different auxiliary storage devices having the functions of the auxiliary storage device 13 and the auxiliary storage device 23. In this example, outputting of the data distribution file by the output unit 113 so as to be stored in the auxiliary storage device 23 includes outputting of the data distribution file temporarily stored in the main memory 12 to the auxiliary storage device 23 by the output unit 113.

The above-described embodiment is also applicable to a case where the POS terminal 4 stores an application of a cash register function.

The above-described embodiment may be applied not only to an apparatus but also to a method executed by the apparatus. The above-described embodiment may be applied to a program capable of causing a computer of an apparatus to execute each of the functions.

The program may be transferred in a state of being stored in the apparatus, or may be transferred in a state of not being stored in the apparatus. In the latter case, the program may be transferred via a network or may be transferred in a state of being recorded in a recording medium. The recording medium is a non-transitory tangible medium. The recording medium is a computer-readable medium. The recording medium only needs to be any medium that can store a program and can be read by a computer, such as a CD-ROM or a memory card, and the form thereof is not limited.

In addition, although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

## Claims

1. An information processing system comprising a first information processing device, a second information processing device, and a storage device, wherein
the first information processing device includes:
an acquisition unit configured to acquire, based on an update to a database that manages data of a plurality of stores, update data for each of the stores from the database;
a file creation unit configured to create a data distribution file for each of the stores based on the update data for each of the stores; and
an output unit configured to output the data distribution file created by the file creation unit so as to be stored in the storage device, and
the second information processing device includes:
an acquisition unit configured, in a case where a data distribution file of a store associated with the second information processing device is stored in the storage device, to acquire the data distribution file of the store associated with the second information processing device; and
a storage control unit configured to update a database based on the data distribution file of the store associated with the second information processing device.

2. The information processing system according to claim 1, wherein
the second information processing device further includes:
a request processing unit configured to output a request regarding a presence or an absence of a data distribution file of a store associated with the second information processing device.

3. The information processing system according to claim 2, wherein
the second information processing device further includes:
an instruction output unit configured to output an update instruction of the data distribution file.

4. The information processing system according to claim 1, wherein
the file creation unit of the first information processing device is configured to create the data distribution file associated with a second information processing device for each second information processing device.

5. The information processing system according to claim 4, wherein
the acquisition unit of the second information processing device is configured to acquire all data distribution files associated with the second information processing device.

6. The information processing system according to claim 4, wherein
the acquisition unit of the second information processing device is configured to acquire a latest data distribution file associated with the second information processing device.

7. The information processing system according to claim 3, wherein
the instruction output unit of the second information processing device is configured to output an update instruction to move the data distribution file to a completion directory.

8. The information processing system according to claim 3, wherein
the instruction output unit of the second information processing device is configured to output an update instruction to delete the data distribution file.

9. An information processing device comprising:
an acquisition unit configured to acquire, based on an update to a database that manages data of a plurality of stores, update data for each of the stores from the database;
a file creation unit configured to create a data distribution file for each of the stores based on the update data for the each of the stores; and
an output unit configured to output the data distribution file created by the file creation unit so as to be stored in a storage device.

10. A second information processing device included in an information processing system which includes a first information processing device including an acquisition unit configured to acquire, based on an update to a database that manages data of a plurality of stores, update data for each of the stores from the database, a file creation unit configured to create a data distribution file for each of the stores based on the update data for the each of the stores, and an output unit configured to output the data distribution file created by the file creation unit so as to be stored in a storage device, the second information processing device comprising:
an acquisition unit configured, in a case where a data distribution file of a store associated with the second information processing device is stored in the storage device, to acquire the data distribution file of the store associated with the second information processing device; and
a storage control unit configured to update a database based on the data distribution file of the store associated with the second information processing device.

11. A recording medium recording an information processing program for causing a computer to execute:
an acquisition function of acquiring, based on an update to a database that manages data of a plurality of stores, update data for each of the stores from the database;
a file creation function of creating a data distribution file for each of the stores based on the update data for the each of the stores; and
an output function of outputting the created data distribution file so as to be stored in a storage device.

12. A recording medium recording an information processing program for a computer of a second information processing device included in an information processing system which includes a first information processing device including an acquisition unit configured to acquire, based on an update to a database that manages data of a plurality of stores, update data for each of the stores from the database, a file creation unit configured to create a data distribution file for each of the stores based on the update data for the each of the stores, and an output unit configured to output the data distribution file created by the file creation unit so as to be stored in a storage device, the program causing the computer of the second information processing device to execute:
an acquisition function of acquiring, in a case where a data distribution file of a store associated with the second information processing device is stored in the storage device, a data distribution file of a store associated with the second information processing device; and
a storage control function of updating a database based on the data distribution file of the store associated with the second information processing device.
